# EUROPEAN PATENT APPLICATION

(11) **EP 0 808 013 A1**
(43) Date of publication of application: **19.11.1997**
(21) Application number: 97302839.2
(22) Date of filing: 25.04.1997
(51) Int. Cl.: H02K 53/00

(54) **Motive power generating apparatus utilizing energy of permanent magnet**

(30) Priority: 25.04.1996 JP 105115/96
(71) Applicant: Kawai, Teruo, Ota-ku, Tokyo 144 (JP); Nihon Riken Co., Ltd., Oota-ku, Tokyo (JP)
(72) Inventor: Kawai, Teruo, Oota-ku, Tokyo (JP)
(74) Representative: Brown, Kenneth Richard

(57) **Abstract**

A motive power generating apparatus utilizing a magnetic field of a permanent magnet, dispensable of electromagnets and supply of electric energy from an external system is disclosed. The apparatus comprises a magnetic pole member (10) on which either magnetic poles (N poles) are disposed with substantially continuous arrangement, at least one magnetic flux control magnet (20), and at least one magnetic member (30) corresponding to the control magnet (20). The control magnet (20) has magnetic poles (S poles) with opposite polarity to those of the pole member (10) so as to converge the magnetic flux flowing into or out from the magnetic poles on the pole member (10) and is movable along it. The magnetic member (30) is arranged as opposed to the magnetic poles of the pole member (10). The pole member (10) has a magnetic flux interrupting portion (A) from which the magnetic flux is converged to the control magnet (20) and a magnetic flux diverging portion (B) other than the interrupting portion (A). The magnetic member (30) includes magnetic poles having opposite polarity to those of the pole member (10) on the facing surface to the magnetic poles of the pole member (10) and is positioned against and fastened to the control magnet (20) so that attractive magnetic force by the magnetic flux of the diverging portion (B) is always applied to each of the magnetic members (30).

## Description

### BACKGROUND OF THE INVENTION

### Field of the Invention

The present invention relates to a motive power generating apparatus utilizing magnetic energy of permanent magnet, specifically to a motive power generating apparatus without supply of external electric energy.

### Description of the Related Art

Various types of electric motors have been conventionally developed, which are designed to convert electric energy into mechanical force. What is common among those general electric motors is that electromagnets are employed as either stators or rotors, to which electric current is supplied from an external system. For example, in a typical induction motor configuration, a rotating magnetic field is generated by sequential change of a current supply to a plurality of electromagnets disposed in the stator and a rotor of a shape such as a squirrel cage follows the rotating magnetic field to produce an output torque.

The electromagnets employed in such conventional electric motors are used as:
(a) a component for generating a magnetic field so that a desired magnetic force is obtained; and
(b) a component for controlling a polarity and an ON/OFF status of the magnetic field.

Among the above two functions of the electromagnets for the general electric motors, a permanent magnet is also able to achieve generation of the desired magnetic field with a desired amplitude of the magnetic force.

However, unlike electromagnets, according to a permanent magnet, an ON/OFF control of magnetic flux, and changing of a polarity is impossible without mechanical measures such as alteration of an orientation of the permanent magnet. Due to this characteristics, an electromagnet cannot be expelled even when permanent magnets are employed for a source of magnetic energy for providing a magnetic field.

In the course of improvement of the electric motors utilizing the functions of electromagnets in their power, speed, and efficiency, the following obstacles have arisen:
(a) An external control circuit tends to become more complicated, for controlling an excitation current for the electromagnets so as to accurately control magnetic field strength, a polarity, and so on.
(b) Braking force is inevitably applied to a rotor against its rotational direction since counter-electromotive force occurs in a coil of an electromagnet when the polarity of the electromagnet is switched, which may deteriorate the motor's efficiency.

### SUMMARY OF THE INVENTION

An object of the present invention is to provide a motive power generating apparatus utilizing a magnetic field of a permanent magnet, dispensable of electromagnets and supply of electric energy from an external system.

To accomplish these and other objects of the invention, according to one aspect of the present invention, a motive power generating apparatus utilizing energy of a permanent magnet, comprises a magnetic pole member on which either N poles or S poles are disposed with substantially continuous arrangement, at least one magnetic flux control means disposed in the proximity of the magnetic pole member, the magnetic flux control means having opposite magnetic poles to those of the magnetic pole member so as to converge magnetic flux flowing into or out from the magnetic poles on the magnetic pole member and being movable along the magnetic pole member, and at least one magnetic member corresponding to the magnetic flux control means, disposed in the proximity of the magnetic pole member. Each of the magnetic members is arranged as opposed to the magnetic poles of the magnetic pole member. The magnetic pole member has a magnetic flux interrupting portion from which the magnetic flux is converged to the magnetic flux control means and a magnetic flux diverging portion other than the magnetic flux interrupting portion. The magnetic member includes magnetic poles with opposite polarity to those of the magnetic pole member on the surface facing the magnetic poles of the magnetic pole member and is positioned against and fastened to the magnetic flux control means, whereby attractive magnetic force by the magnetic flux of the magnetic flux diverging portion is always applied to each of the magnetic members.

According to the present invention having the above construction, the magnetic member is attracted to the magnetic flux diverging portion and travels continuously along the magnetic pole member along with movement of the magnetic flux interrupting portion defined by the magnetic flux control means. Therefore, the above power generating apparatus is able to continuously generate motive power without supply of electric energy from an external system.

Still other objects and advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawing and description are to be regarded as illustrative in nature, and not as restrictive.

### BRIEF DESCRIPTION OF THE DRAWING

**Figs. 1A** and **1B** are schematic drawings for explaining a phenomenon giving basic principle of the present invention;
**Fig. 2** is a schematic plan view of a motive power generating apparatus according to one embodiment of the present invention;
**Figs. 3A** and **3B** show cross-sectional views of the apparatus in **Fig. 2**;
**Fig. 4** is a schematic plan view of a motive power generating apparatus according to another embodiment of the present invention;
**Figs. 5A** to **5C** show exemplary cross-sectional views of magnetic flux control mechanism of the present invention;
**Fig. 6** shows a schematic plan view of a motive power generating apparatus according to yet another embodiment of the present invention;
**Figs. 7A** and **7B** are schematic cross-sectional views of the apparatus in **Fig. 6**;
**Figs. 8** and **9** are plan views of a motive power generating apparatus according to further embodiment of the present invention; and
**Fig. 10** is a cross-sectional view of the apparatus in Figs. 8 and 9.

### DESCRIPTION OF PREFERRED EMBODIMENTS

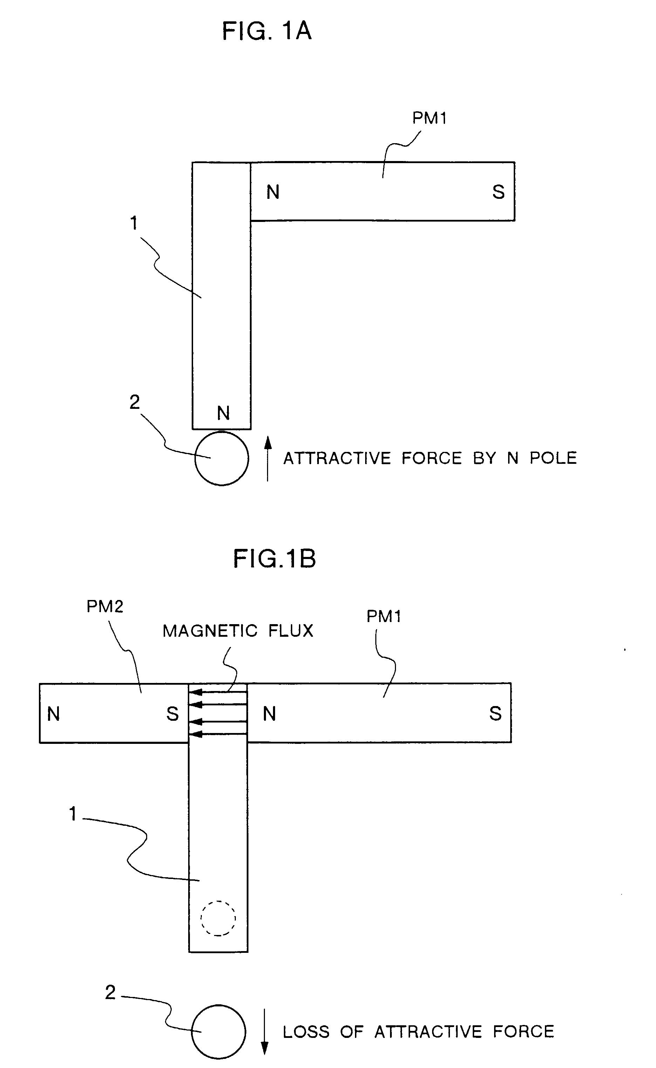

**Figs. 1A** and **1B** illustrate principle of controlling magnetic flux for functioning a motive power generating apparatus according to the present invention. As shown in **Fig. 1A**, a magnetic stick **1** is perpendicularly contacted to an N pole end portion of a bar-shaped permanent magnet **PM1**. In this condition, an N pole appears at the other end portion of the magnetic stick **1** as is generally known. This is because the magnetic flux from the N pole of the permanent magnet **PM1** passes through the magnetic stick **1** with relatively smaller magnetic resistance. And a ball-shaped magnetic body **2** is attracted to the N pole of the magnetic stick **1** by the magnetic flux therefrom.

For the next step, an S pole of another bar-shaped permanent magnet **PM2** is placed on the magnetic body **1** as opposed to the N pole of the permanent magnet **PM1**. In this situation, the magnetic flux from the N pole of the permanent magnet **PM1** is converged to the confronting S pole of the permanent magnet **PM2** and the N pole at the end portion of the magnetic body **1** disappears. The ball-shaped magnetic body **2** loses the attractive force from the magnetic body **1** to fall down therefrom. At the other end portion of the magnetic body **1, Fig. 1A** shows presence of the magnetic flux and **Fig. 1B** shows absence of the same.

This phenomenon indicates that an ON/OFF status of the magnetic flux from the permanent magnet **PM1** is controllable by presence of the permanent magnet **PM2**. In other words, switching of the magnetic flux is possible using only a permanent magnet without introducing electric energy from an external system unlike electromagnets.

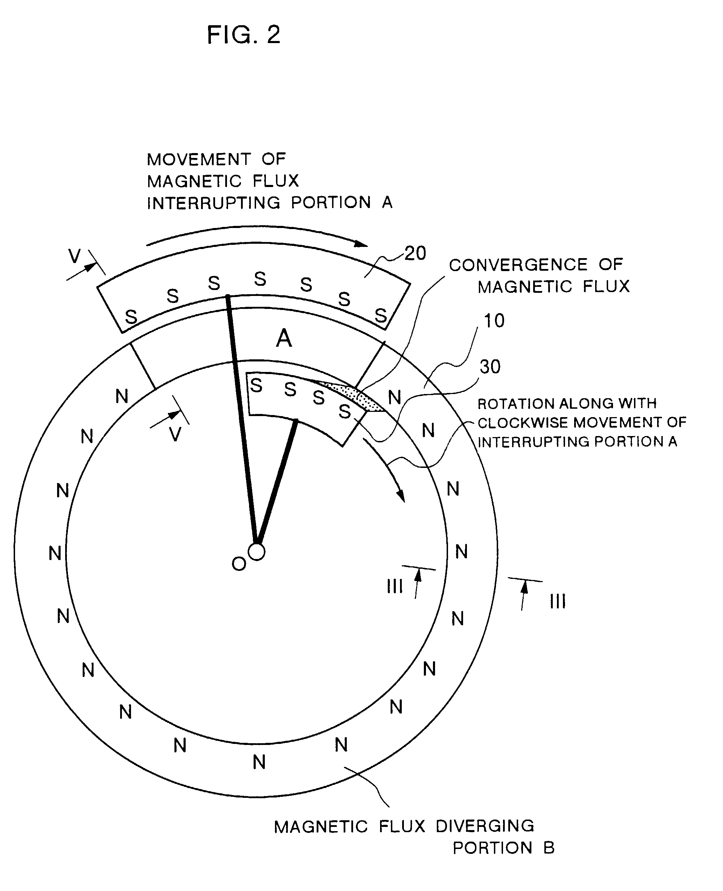

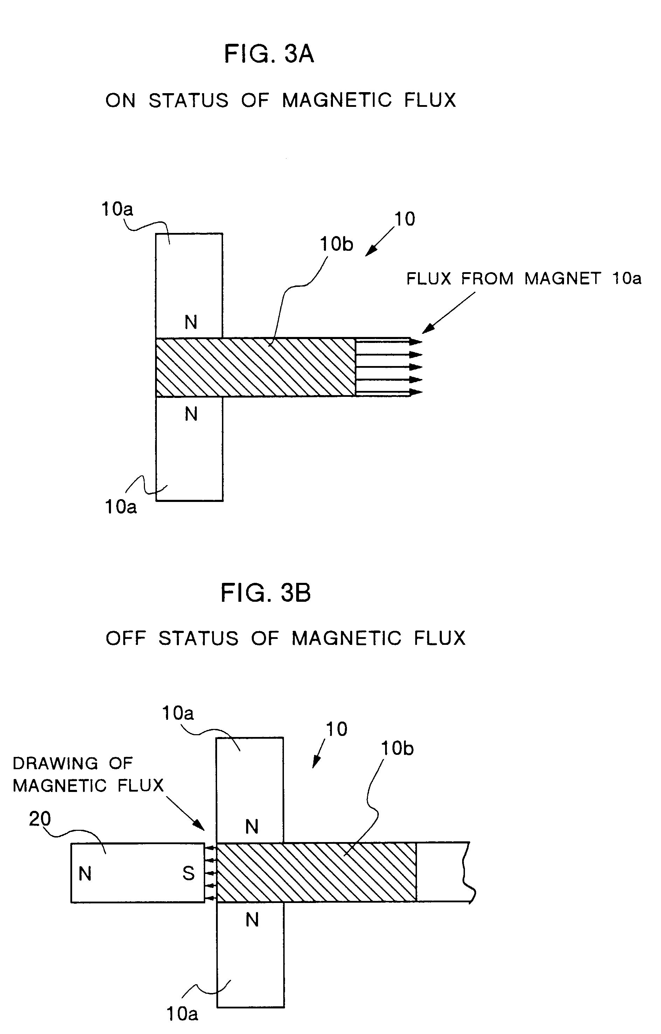

Referring to **Figs. 2, 3A** and **3B**, one embodiment of a motive power generating apparatus using switching of magnetic flux by a permanent magnet will be described herebelow. **Fig. 2** is a plan view of one embodiment of a motive power generating apparatus of the present invention, and **Figs. 3A** and **3B** are schematic partial vertical sectional views of the same. In **Fig. 2,** N poles are disposed on the entire inner peripheral surface of a ring-shaped magnetic body **10** as a magnetic pole member. As shown in **Figs. 3A** and **3B**, a pair of permanent magnets **10a** are positioned across an outer peripheral portion of a ring-shaped magnetic body **10b** as the same poles, N poles in this case, thereof being faced each other. Thus, the magnetic flux from the permanent magnets **10a** pass through the magnetic body **10b** of relatively smaller magnetic resistance while repulsing each other to form N poles entirely around the inner peripheral surface of the magnetic body **10b**.

As shown in **Fig. 2**, an arc-shaped permanent magnet **20** as a magnetic flux control means is disposed in the proximity of the outer periphery of the ring-shaped magnetic body **10**. The arc-shaped magnet **20** is attached in rotatable manner around the center **O** of the ring-shaped magnetic body **10** so that the arc-shaped magnetic body **20** is able to move along the outer periphery of the ring-shaped magnetic body **10**. S poles are arranged on the inner periphery, that is, on the surface facing the outer peripheral surface of the ring-shaped magnetic body **10** of the arc-shaped permanent magnet **20**. Referring to **Figs. 2** and **3B**, since the magnetic flux from the respective permanent magnets **10a** is drawn into the immediate S poles of the arc-shaped permanent magnet **20** in an adjacent region of the outer periphery of the ring-shaped magnetic body **10**, magnetic poles do not appear on the inner periphery of the magnetic body **10b** from which the magnetic flux diverges. In other words, the magnetic flux around the inner periphery of the ring-shaped magnetic body **10** is interrupted in the portion **A** where the arc-shaped magnet **20** is adjacently placed. Since the arc-shaped magnet **20** is so disposed to move along the outer periphery of the ring-shaped magnetic body **10** as mentioned above, the magnetic flux interrupting portion **A** moves along with the arc-shaped magnet **20**'s movement.

On the other hand, a movable magnetic body **30** as a magnetic member is arranged at the inner periphery of the ring-shaped magnetic body **10**. The movable magnetic body **30** is rotatable around the center **O** of the ring-shaped magnetic body **10**. The movable magnetic body **30** is also placed around the fore portion of the magnetic flux interrupting portion **A** in the rotary direction of the arc-shaped magnet **20**, i.e., in a clockwise direction in the embodiment shown in **Fig. 2.** The magnetic poles having an opposite polarity, S poles, to the poles of the ring-shaped magnetic body **10**, N poles, appear on the outer peripheral surface of the movable magnetic body **30**, i.e., the facing surface against the inner peripheral surface of the ring-shaped magnetic body **10**. Therefore, the movable magnetic body **30** is attracted toward the ring-shaped magnetic body **10**. Since the movable magnetic body **30** is positioned over the boundary portion between the magnetic flux interrupting portion **A** and the magnetic flux diverging portion **B** in which N poles of the ring-shaped magnetic body **10** exist, the movable magnetic body **30** is affected by the attractive force in a clockwise direction along with the inner periphery of the ring-shaped magnetic body **10**. In order to obtain maximum torque, the movable magnetic body **30** may be placed at the position where the maximum attractive force is applied to the magnetic body **30**. While the selected position is maintained, the movable magnetic body **30** is integrally fastened to the arc-shaped magnet **20**. Thus, the movable magnetic body **30** and the arc-shaped magnet **20** are integrally affected by the attractive force by the ring-shaped magnetic body **10**.

During a preparation period for operation in which the movable magnetic body **30** is held by external force so as not to move against the ring-shaped magnetic body **10**, the magnetic body **30** is always attracted to the magnetic body **10** to be urged in a clockwise direction. Therefore, once the holding force for the movable magnetic body **30** is removed upon operation, the magnetic body **30** is attracted by the N poles of the ring-shaped magnetic body **10** to travel in a clockwise direction along the ring-shaped magnetic body **10** with the arc-shaped magnet **20** integrally fastened thereto. Since the magnetic flux interrupting portion **A** moves clockwise along with the arc-shaped magnet's movement, the movable magnetic body **30** relatively remains at the same position for the magnetic flux interrupting portion **A**. Thus, the sequence of rotation is described as follows:
(1) The magnetic flux from the diverging portion B of the ring-shaped magnetic body 10 attracts the movable magnetic body 30 to urge in a clockwise direction.
(2) The arc-shaped magnet 20 is moved clockwise which is integrally fastened to the magnetic body 30.
(3) The magnetic interrupting portion A formed by the arc-shaped magnet 20 moves clockwise.
(4) Since the magnetic flux of the magnetic flux diverging portion B of the ring-shaped magnetic body 10 moves clockwise, the movable magnetic body 30 is continuously urged in a clockwise direction.

Based on the above sequence, the movable magnetic body **30** continues production of rotational torque about the center **O** of the ring-shaped magnetic body **10**. It should be noted that ferromagnetic material such as iron may be employed for the movable magnetic body **30** in case that desired torque is obtained.

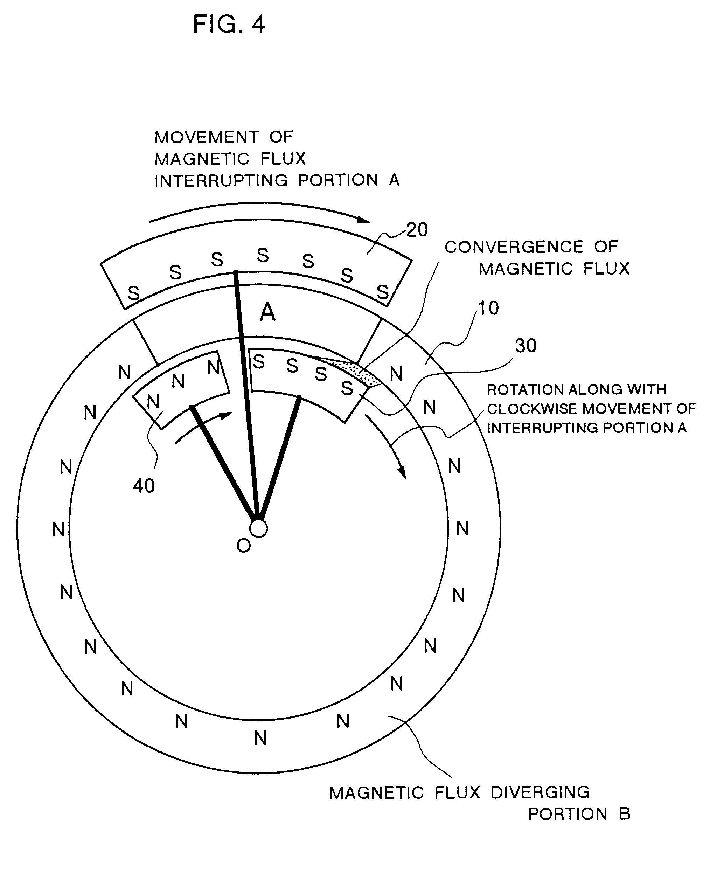

Another embodiment of the present invention will be described herebelow referring to **Fig.4**. In this embodiment, an additional movable magnetic body **40** as an additional magnetic member is provided in addition to the movable magnetic body **30** in the preceding embodiment. The same N poles as the magnetic pole appearing on the inner periphery of the ring-shaped magnetic body **10**, N poles in this case, are formed on the outer peripheral surface of the additional movable magnetic body **40**, which face the inner peripheral surface of the ring-shaped magnetic body **10**. The additional movable magnetic body **40** is movably disposed along the inner periphery of the ring-shaped magnetic body **10** about the center **O** thereof.

The additional movable magnetic body **40** is arranged at the boundary portion between the magnetic flux interrupting portion **A** of the ring-shaped magnetic body **10** and the magnetic flux diverging portion **B** where magnetic flux diverges from the N poles on the inner peripheral surface of the magnetic body **10** in the same manner as the movable magnetic body **30**. In this embodiment, however, the additional movable magnetic body **40** at the rearward portion in a clockwise moving direction of which exists the magnetic flux diverging portion **B**, is applied a repulsive force by the same poles of the ring-shaped magnetic body **10** to be driven clockwise along the inner periphery of the ring-shaped magnetic body **10**. The additional movable magnetic body **40** is integrally fastened to the arc-shaped magnet **20** at the position of maximum repulsive force by the magnetic flux from the magnetic flux diverging portion **B** of the ring-shaped magnetic body **10**.

Power generation by the additional movable magnetic body 40 is substantially performed in the same manner as that of the first movable magnetic body 30 except utilizing repulsion instead of attraction. The sequence of rotation is described as follows:
(1) The magnetic flux from the diverging portion B of the ring-shaped magnetic body 10 repels the additional movable magnetic body 40 to urge in a clockwise direction.
(2) The arc-shaped magnet 20 is moved clockwise which is integrally fastened to the magnetic body 40.
(3) The magnetic interrupting portion A formed by the arc-shaped magnet 20 moves clockwise.
(4) Since the magnetic flux of the magnetic flux diverging portion B of the ring-shaped magnetic body 10 moves clockwise, the additional movable magnetic body 40 is continuously urged in a clockwise direction.

Based on the above sequence, the additional movable magnetic body **40** continues production of rotational torque about the center **O** of the ring-shaped magnetic body **10**. As a result, the repulsive force of the additional movable magnetic body **40** increases the rotational torque in addition to the attractive force applied to the movable magnet body **30** in the first embodiment.

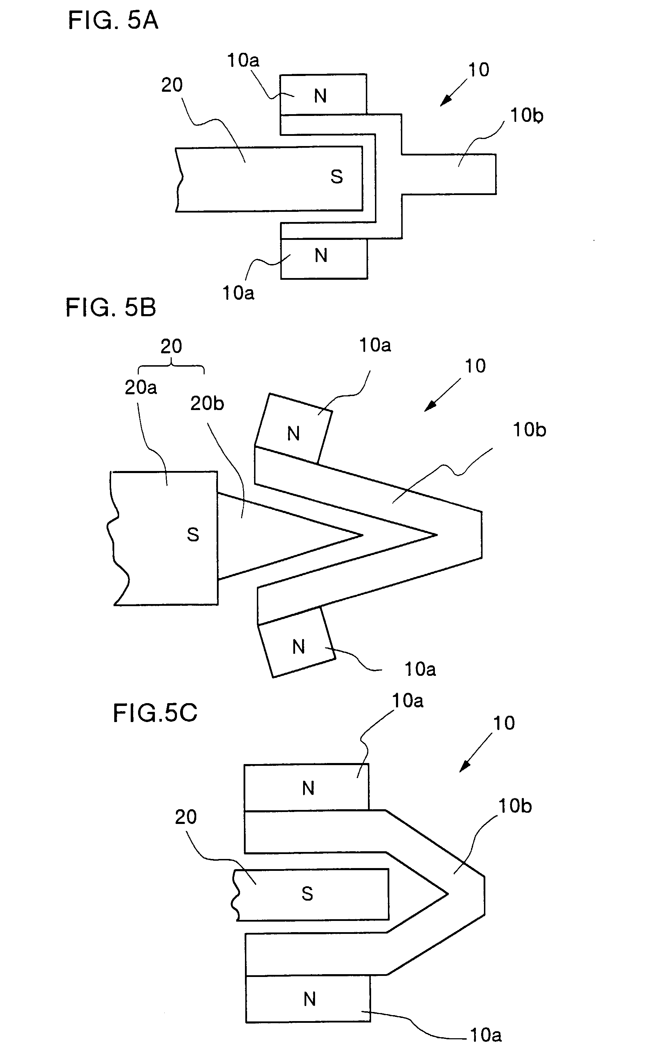

It should be noted that the construction of the ring-shaped magnetic body **10** and the arc-shaped magnet **20** is not limitative to that shown in **Figs.3A** and **3B** so as to form the magnetic flux interrupting portion **A** on the inner surface of the ring-shaped magnetic body **10**. For example, as shown in **Figs.5A** to **5C**, various other configurations are employable in the present invention. These figures correspond to the magnetic flux interrupting state in **Fig.3B** in which the magnetic flux does not diverge from the ring-shaped magnetic body **10**. According to either configuration, the magnetic flux of the permanent magnet **10a** is converged to the opposite magnetic poles on the arc-shaped magnet **20** positioned in the proximity of the magnet **10a** and the magnetic pole by the magnet **10a** does not appear on the inner periphery of the ring-shaped magnetic body **10b**, i.e., at the right-hand side in **Fig.3B**. As shown in **Fig.5B**, the arc-shaped magnet **20** may be a permanent magnet **20a** with a pole piece **20b** of ferromagnetic material.

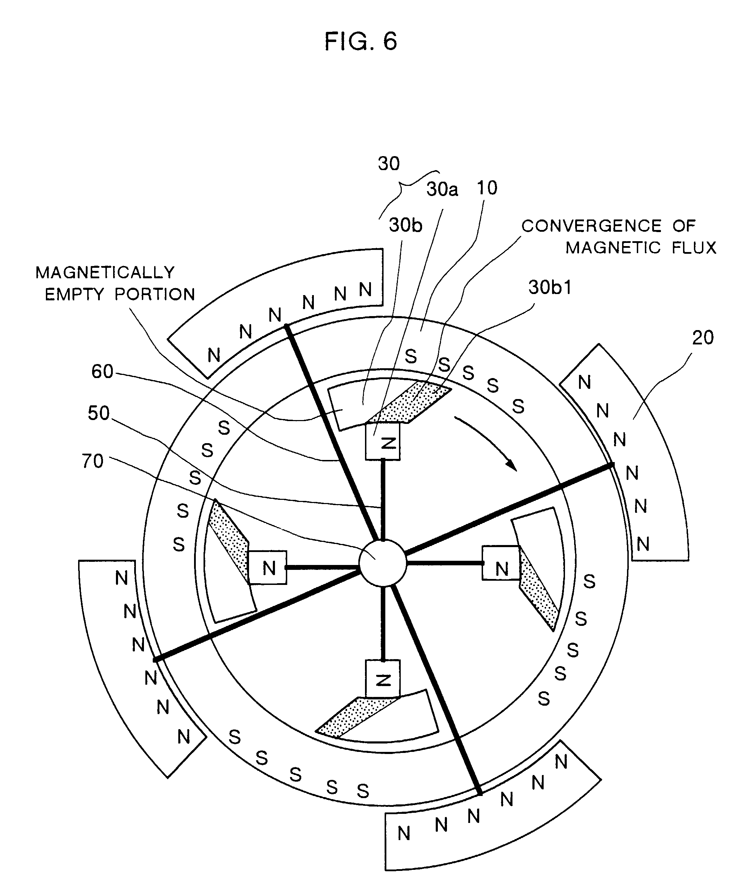

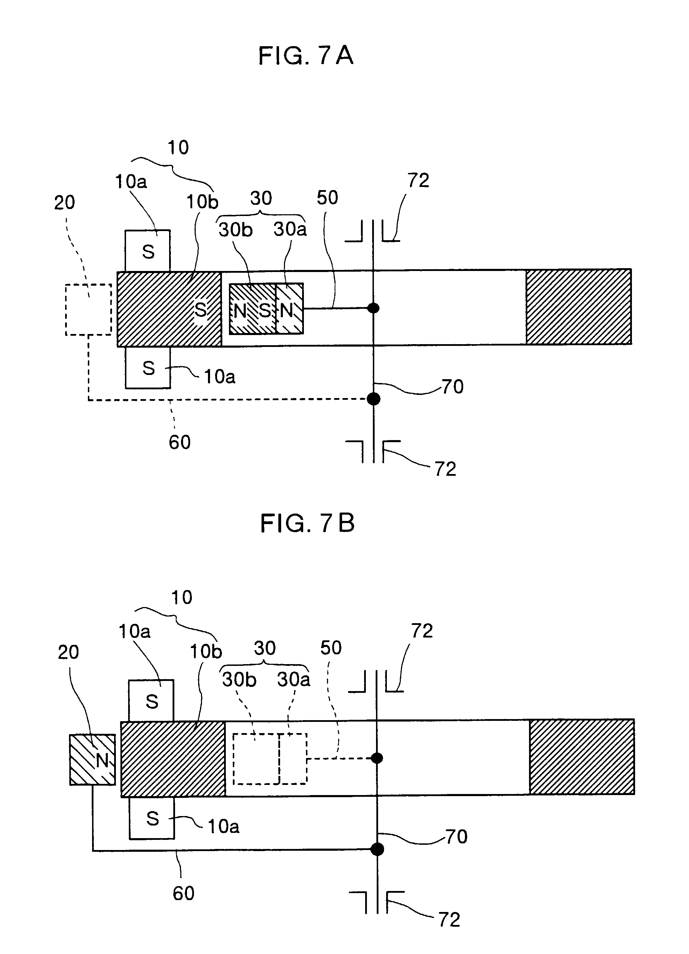

Referring to **Figs. 6, 7A,** and **7B,** further embodiment of the present invention will be explained herebelow. **Fig.6** is a plan view of this embodiment and **Figs. 7A** and **7B** show longitudinal sectional views of the same. The shown motive power generating apparatus comprises a ring-shaped magnetic body **10** on the inner periphery of which is provided S poles, four blocks of arc-shaped magnets **20,** and corresponding blocks of movable magnetic bodies **30** as a magnetic member. The arc-shaped magnets **20** are arranged around the outer periphery of the ring-shaped magnetic body **10** substantially every ninety (90) degrees, each having a central angle of approximately forty-five (45) degrees. Each of the arc-shaped magnets **20** is allowed to travel along the outer periphery of the ring-shaped magnetic body **10**. The arc-shaped magnets **20** are coupled with each other using mechanical members so that positional relationship among the magnets **20** is maintained. Such a portion where the arc-shaped magnet **20** is placed in the proximity of the ring-shaped magnetic body **10** and magnetic flux does not diverge from the inner peripheral surface thereof is defined as a magnetic flux interrupting portion **A**.

On the other hand, four pieces of movable magnetic bodies **30** are disposed around the inner periphery of the ring-shaped magnetic body **10** substantially every ninety (90) degrees. Each of the movable magnetic bodies **30** has a permanent magnet **30a** and a magnetic body **30b** of ferromagnetic material such as iron fixed at the end portion thereof. The magnetic body **30b** of this embodiment has an edge portion **30b1** at one end portion thereof so as to urge convergence of magnetic flux.

Each of the movable magnetic body **30** is positioned around the boundary portion between the magnetic flux interrupting portion **A** and the magnetic flux diverging portion **B** in the same manner as of the above-mentioned embodiments. Specifically, the optimal position is the point where the maximum magnetic attractive force is applied to the magnetic body **30** by the magnetic flux of the ring-shaped magnetic body **10**. After the magnetic bodies **30** are thus positioned, the magnetic bodies **30** and the arc-shaped magnets **20** are fixed to a supporting shaft **70** with supporting arms **50** and **60**, respectively so that positional relationship among the magnetic bodies **30** and the magnets **20** are maintained. The supporting shaft **70** is rotatably supported by bearings **72**.

It should be noted that magnetic force of the arc-shaped magnet **20** and the permanent magnet **30a** attached to the movable magnetic body **30** should be so determined that a "magnetically empty portion" is formed by convergence of the magnetic flux of the permanent magnet **30a** to the magnetic flux diverging portion **B** at the rear end portion of the magnetic body **30b** of the movable magnetic body **30**. The "magnetically empty portion" is defined as a portion through which relatively less or no magnetic flux passes.

In case that the magnetic force of the permanent magnet **30a** is extremely greater than that of the arc-shaped magnet **20**, it is likely that the permanent magnet **30a** may draw the magnetic flux of the ring-shaped magnetic body **10** which should normally be converged to the arc-shaped magnet **20** to prevent sufficient formation of the interrupting portion **A**. In this situation, convergence of the magnetic flux of the permanent magnet **30a** of the movable magnetic body **30** to the opposite magnetic pole on the ring-shaped magnetic body **10** may become insufficient to obtain desired torque. Furthermore, leakage of the magnetic flux of the interrupting portion **A** of the ring-shaped magnetic body **10** to the permanent magnet **30a** may cause the magnetic attractive force in a reverse direction to make it impossible for the movable magnetic bodies **30** to travel in a rotational direction, i.e., in a clockwise direction in **Fig. 6**. In order to avoid such undesirable phenomena, respective magnetic forces of the arc-shaped magnet **20** and the permanent magnet **30a** are to be determined as described above. Since behavior of the magnetic flux through the ring-shaped magnetic body **10** may vary according to the factors such as length of a magnetic circuit including thickness of the ring-shaped magnetic body **10** and the magnetic body **30b**, and material of the same, it seems to be practical to optimize the magnetic force of the magnets **20** and **30a** through experiments.

In the motive power generating apparatus of the above described embodiment, each of the motive magnetic bodies **30** is urged in a direction away from the interrupting portion **A**, i.e., a clockwise direction along with the inner periphery of the ring-shaped magnetic body **10** by the magnetic attractive force of the same. The magnetic bodies **30** and the arc-shaped magnets **20** are coupled to the supporting shaft **70** with supporting arms **50** and **60**, respectively, therefore, as explained with respect to the first and additional embodiments, the apparatus of this embodiment functions in the following steps:
(1) The magnetic flux from the diverging portion **B** of the ring-shaped magnetic body **10** attracts each of the movable magnetic body **30** to urge in a clockwise direction.
(2) The respective arc-shaped magnets **20** are moved clockwise which is integrally fastened to the magnetic body **30**.
(3) The magnetic flux interrupting portion **A** formed by the arc-shaped magnet **20** moves clockwise.
(4) Since the magnetic flux of the magnetic flux diverging portion **B** of the ring-shaped magnetic body **10** moves clockwise, each of the movable magnetic body **30** is continuously urged in a clockwise direction.

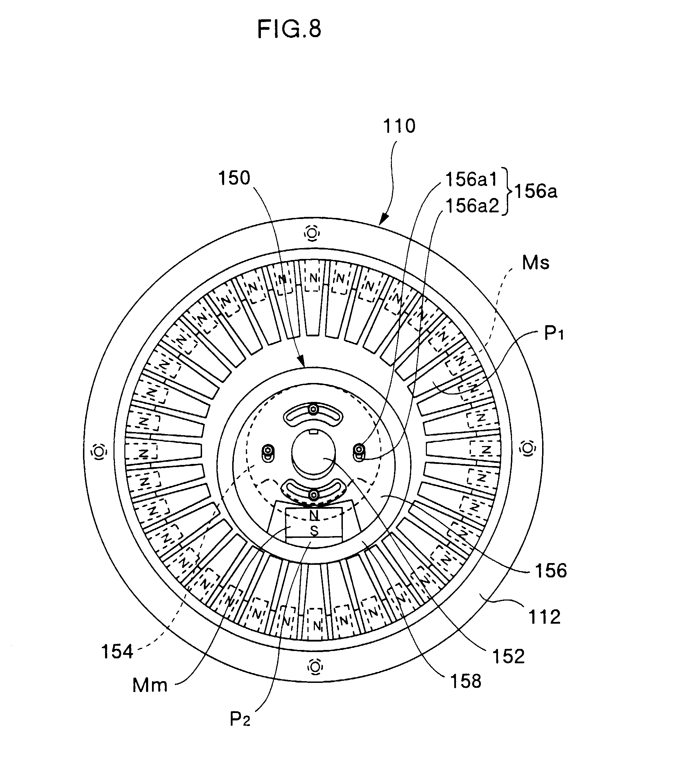

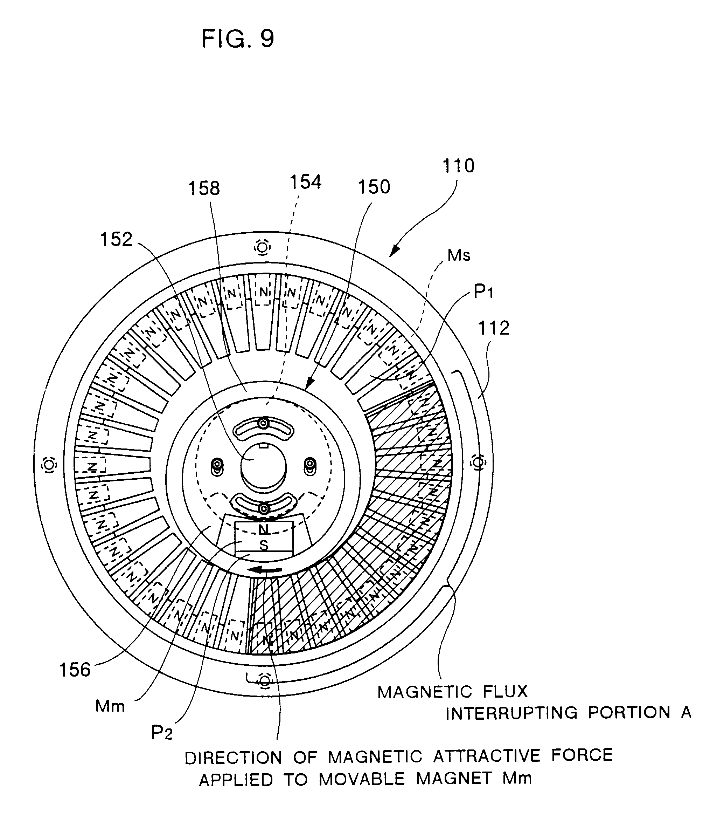

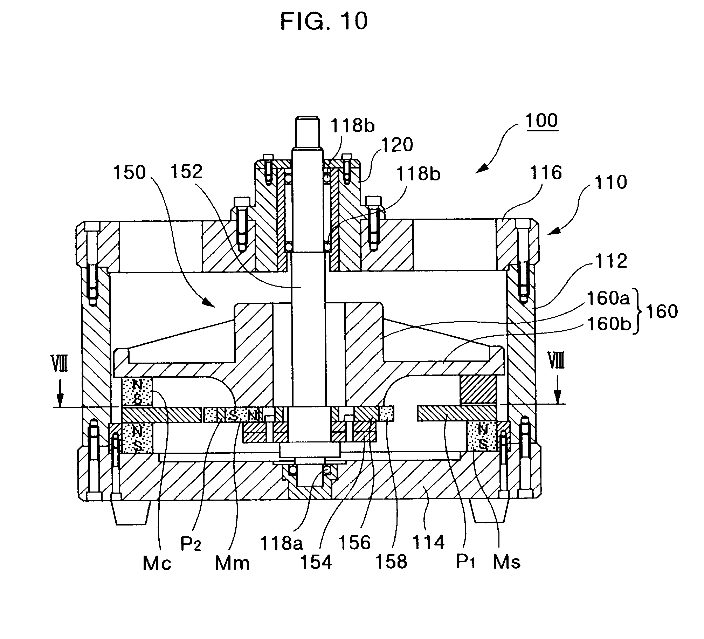

Referring to **Figs.8** to **10,** yet another embodiment of the present invention will be described herebelow. **Figs. 8** and **9** are plan views of the apparatus of the embodiment and **Fig. 10** is a vertical cross section of the same. The apparatus of the present embodiment is an implementation of the first embodiment described above.

A motive power generating apparatus **100** comprises a stator unit **110** for defining a housing portion and a rotating unit **150** rotatably installed in the stator unit **110**, including a movable magnet and a magnetic flux control device.

The stator unit **110** has a hollow cylindrical body portion **112**, a lower bracket **114** secured underneath the body portion **112**, an upper bracket **116** attached to the upper surface of the body portion **112**, a plurality of stator magnets **Ms** and pole pieces **P1**. The stator magnets **Ms** are arranged circularly along the inner peripheral portion of the lower bracket **114** with a predetermined interval. Each of the pole pieces **P1** is secured on the upper surface of the respective stator magnets **Ms**.

The body portion **112** is a hollow cylindrical member such as a steel pipe with the inner surface thereof finished by a lathe or the like. The lower bracket **114** is secured at one end of the body portion **112** with bolts so as to close an opening at the one end thereof. In the central portion of the lower bracket **114** is disposed a bearing **118** for rotatably supporting the lower end portion of the rotating unit **150**.

Thirty-six (36) pieces of the stator magnets **Ms** are disposed with a pitch angle of ten (10) degrees along the inner portion of the outer periphery of the lower bracket **114**. This arrangement provides the equivalent configuration to the ring-shaped permanent magnet **10a** in the preceding embodiments. According to this configuration, in case that a ring-shaped permanent magnet having a circular magnetized portion is impossible to be employed due to difficulty in manufacture, circular arrangement of the stator magnets **Ms** in the present embodiment will provide equivalent function.

Each of the pole pieces **P1** is a magnetic member having a rectangular plate shape secured on the respective stator magnets **Ms** as projecting toward the center of the ring composed of the magnets **Ms**. The pole piece **P1** is equipped with to form a magnetic circuit for the magnetic flux of the stator magnet **Ms** and to reduce a gap between the rotating unit **150** as small as possible. Reduction of the gap will improve efficiency of the apparatus **100**. In this embodiment, the gap is set at about 1.0mm. In the central portion of the upper bracket **116**, there disposed a bearing holder **120** with bolted thereon. The bearing holder **120** is provided with a penetrating hole along the center axis thereof with a pair of bearings **118b** disposed therein. The bearings **118b** rotatably supports the rotating unit **150** in the stator unit **110** with the bearing **118a** in the lower bracket **114**.

The rotating unit **150** comprises a rotating shaft **152**, a stator disc **154**, an adjusting disc **156**, a movable magnet **Mm**, a pole piece **P2**, a magnetic ring **158**, a magnetic flux control magnet **Mc**, and a holder **160** for the magnet **Mc.**

The rotating shaft **152** functions as an output shaft of the apparatus **100** of the present embodiment and is rotatably supported with the bearings **118a, 118b** of the stator unit **110**. The stator disc **154** is fixed to the lower portion of the rotating shaft **152**. On the stator disc **154** is screwed the adjusting disc **156** and the movable magnet **Mm** is disposed in a notched portion of the adjusting disc **156**. The magnetic ring **158** is disposed as surrounding the outer circumference of the adjusting disc **156** and the movable magnet **Mm** disposed therein. The pole piece **P2** is inserted in the radially outer end portion of the movable magnet **Mm** so as to fill the gap between the magnetic ring **158** to form a magnetic circuit for the magnetic flux of the movable magnet **Mm**.

As shown in **Fig. 8,** the adjusting disc **156** is slidable in a radial direction using a pair of gap adjusting mechanism **156a**, each including an adjusting screw **156a1** and an oblong hole **156a2** slidably engaging therewith, whereby the gap between the magnetic ring **158** and the pole piece **P1** of the stator unit **110** is made adjustable. The gap is set at approximately 1.0mm in the present embodiment. It should be noted that the adjusting disc **156** and the magnetic ring **158** are not necessarily disposed eccentric to the rotating shaft **152** as in the present embodiment. The adjusting disc **156** and the magnetic ring **158** may be disposed concentric with the rotating shaft **152**. The eccentric configuration as the present embodiment is also employable with a counter weight.

On the upper surface of the adjusting disc **156** is secured the magnetic flux control magnet holder **160** for supporting the magnetic flux control magnet **Mc**. The holder **160** for the magnet **Mc** comprises a boss portion **160a** through which the rotating shaft **152** is disposed at the central portion thereof, and a magnet holding portion **160b** radially extending in a disc shape from the boss portion **160a**. On the lower surface of the magnet holding portion **160b** there fixed the magnetic flux control magnets **Mc** so as to face the pole pieces **P1** of the stator unit **110**. In other words, the control magnets **Mc** are so disposed as to face the stator magnets **Ms** as the pole pieces **P1** interposed therebetween. For the magnetic flux control magnet **Mc**, a magnet equivalent to that for the stator magnet **Ms** is employed. A group of the control magnets **Mc** forms an arc shape having a center angle of 120 degrees composed of twelve (12) magnets. Therefore, as shown in **Fig. 9,** the magnetic flux of the stator magnets **Ms** of the stator unit **110** is converged to the control magnets **Mc** to define a magnetic flux interrupting portion **A** along the pole pieces **P1** over 120 degrees. Thus, under the condition that the movable magnet **Mm** is positioned and secured in relation to the control magnet **Mc** as shown in **Fig.9,** the motive power generating apparatus of this embodiment produces a continuous torque by the constant magnetic attractive force in a clockwise direction applied to the movable magnet **Mm**.

It should be noted that a ring-shaped magnetic body having a circumferentially continuous structure may be employed instead of independent pole pieces **P1**. In this case, the ring-shaped magnetic body of excessive thickness may cause convergence of the magnetic flux of the stator magnet **Ms** by the control magnet **Mc** from the other area than the normal magnetic flux interrupting portion **A**. This may further lead to the situation in that the boundaries of the interrupting portion **A** become so ambiguous that insufficient convergence of the magnetic flux of and insufficient application of magnetic attractive force to the movable magnet Mm may occur. Thus, in case of employing a ring-shaped magnetic body instead of the pole pieces **P1**, excessively thicker member than necessary should not be used.

Each of the preferred embodiments described above has disclosed a rotary motor configuration. It is also possible to construct a motive power generating apparatus for linear propulsion according to the present invention.

Referring to the first embodiment of the present invention as shown in **Fig.2**, a linear motion type apparatus may comprise a linear magnetic body corresponding to the ring-shaped magnetic body **10**, a movable magnet corresponding to the arc-shaped magnet **20**, and a movable magnetic body corresponding to the magnetic body **30**. Both the movable magnet and the movable magnetic body are so disposed as to travel along the linear magnetic body with an appropriate slidably supporting mechanism. The movable magnetic body is integrally fastened to the movable magnet at the point of maximum magnetic attractive force of the magnetic flux diverging portion **B**. According to this configuration modified from the first embodiment above, a moving part including the movable magnetic body and the movable magnet travels in a direction of the attractive force of the diverging portion **B** applied to the movable magnetic body.

While the present invention has been discussed in terms of the preferred embodiments, the present invention should be implemented in various fashions with incorporating modifications of the disclosed embodiments in addition, omission or modification of the detailed construction, without departing from the principle of the invention. Therefore, the present invention should be understood to include all embodiments encompassed within the spirit of the invention set out in the appended claims.

## Claims

1. A motive power generating apparatus utilizing energy of a permanent magnet, comprising:
a magnetic pole member on which either N poles or S poles are disposed with substantially continuous arrangement;
at least one magnetic flux control means disposed in the proximity of said magnetic pole member, said magnetic flux control means having magnetic poles with opposite polarity to those of the magnetic pole member so as to converge magnetic flux flowing into or out from the magnetic poles on said magnetic pole member and being movable along said magnetic pole member; and
at least one magnetic member corresponding to said magnetic flux control means, disposed in the proximity of said magnetic pole member as opposed to the magnetic poles of the magnetic pole member,
said magnetic member including magnetic poles having opposite polarity to those of the magnetic pole member on the surface facing the magnetic poles of the magnetic pole member and being so positioned that attractive magnetic force is applied thereto and fastened to said magnetic flux control means,
whereby said magnetic pole member is defined to have a magnetic flux interrupting portion from which the magnetic flux is converged to the magnetic flux control means and a magnetic flux diverging portion other than the magnetic flux interrupting portion, and attractive magnetic force by the magnetic flux of the magnetic flux diverging portion is always applied to each of the magnetic members.

2. A motive power generating apparatus as set forth in claim 1, further comprising at least one additional magnetic member corresponding to said magnetic flux control means, disposed opposite to the magnetic poles of the magnetic pole member, said additional magnetic member having the same poles as those of the magnetic pole member on the facing surface thereto, and fastened thereto each other as positioned to said magnetic flux control means so that repulsive magnetic force by the magnetic flux diverging portion is always applied thereto.

3. A motive power generating apparatus as set forth in claim 1, wherein said magnetic pole member comprises a ring-shaped magnetic body having either N poles or S poles along the inner periphery thereof.

4. A motive power generating apparatus as set forth in claim 3, wherein a plurality of permanent magnets are arranged along the outer peripheral portion of the ring-shaped magnetic body with the magnetic body interposed therebetween, said permanent magnets facing the same magnetic poles thereof each other.

5. A motive power generating apparatus as set forth in claim 1, wherein said magnetic member is so positioned that maximum magnetic force by the magnetic flux diverging portion is applied thereto.

6. A motive power generating apparatus as set forth in claim 1, wherein said magnetic pole member comprises a plurality of permanent magnets arranged in a ring shape so that either N poles or S poles are formed on the inner periphery thereof.

7. A motive power generating apparatus as set forth in claim 1, wherein said magnetic flux control means includes an arc-shaped permanent magnet.

8. A motive power generating apparatus as set forth in claim 7, wherein a pole piece is provided with said arc-shaped permanent magnet at the inner periphery thereof.

9. A motive power generating apparatus utilizing energy of a permanent magnet, comprising:
a substantially ring-shaped magnetic pole member on which either N poles or S poles are disposed with substantially continuous arrangement;
a plurality of magnetic flux control magnets disposed in the proximity of said magnetic pole member, each of said magnetic flux control magnets having magnetic poles with opposite polarity to those of the magnetic pole member so as to converge magnetic flux flowing into or out from the magnetic poles on said magnetic pole member and being movable along the outer periphery of said magnetic pole member; and
a plurality of rotor members corresponding to said magnetic flux control magnets, disposed in the proximity of the inner periphery of said magnetic pole member, said rotor members arranged as opposed to the magnetic poles of the magnetic pole member , wherein
said magnetic pole member has a magnetic flux interrupting portion from which the magnetic flux is converged to the magnetic flux control magnets and a magnetic flux diverging portion other than the magnetic flux interrupting portion,
each of said rotor members includes magnetic poles having opposite polarity to those of the magnetic pole member on the facing surface thereto and is positioned against and fastened to said magnetic flux control magnets,
whereby attractive magnetic force by the magnetic flux of the magnetic flux diverging portion is always applied to each of the rotor members.

10. A motive power generating apparatus as set forth in claim 9, wherein each of said rotor members includes a permanent magnet and a pole piece.

11. A motive power generating apparatus as set forth in claim 10, wherein said pole piece is arc-shaped and has an acute portion at one end thereof, whereby the magnetic flux converges thereto to cause magnetic attractive force.

12. A motive power generating apparatus utilizing energy of a permanent magnet, comprising:
a substantially ring-shaped stator unit including a plurality of stator magnets arranged along a circular contour and pole pieces attached on the upper surface of the respective magnets;
a substantially disc-shaped magnetic flux control unit rotatably disposed in the proximity of the upper surface of the stator unit, said control unit having a plurality of control magnets at the lower surface thereof as opposing to the pole pieces of said stator magnets; and
a rotor unit rotatably disposed in the stator unit, said rotor unit having a disc unit with a permanent magnet piece and a magnetic ring surrounding the disc unit,
said control magnets disposed to converge the magnetic flux of the stator magnets so as to generate a magnetic flux interrupting portion,
said rotor unit and said control unit integrally coupled so that the magnetic attractive force is applied to the rotor magnet by the magnetic flux of the stator magnets.

13. A motive power generating apparatus as set forth in claim 12, wherein said rotor unit further comprises a stator disc and an adjusting disc, said adjusting disc holding said rotor magnet in a notched portion thereof and attached on said stator disc in slidable manner, whereby a gap between the magnetic ring and the pole pieces of the stator unit is able to be adjusted.

14. A motive power generating apparatus as set forth in claim 13, wherein said adjusting disc is engaged with the stator disc using fastening bolts through oblong holes.

15. A motive power generating apparatus as set forth in claim 12, wherein each of said pole pieces of the stator unit is fixed to the respective stator magnets with one end thereof projected toward the center axis of the stator unit.

16. A motive power generating apparatus as set forth in claim 12, wherein said rotor magnet faces to the inner peripheral surface of the magnetic ring with a pole piece interposed therebetween.

17. A magnetic motor, comprising:
a magnetic pole member having an array of magnetic poles spaced apart along a path;
a magnetic flux control means mounted alongside said magnetic pole member for movement along said path and having one or more magnetic poles of opposite magnetic polarity to the poles of said magnetic pole member, for diverting the magnetic flux due to the latter said poles in a flux interruption portion of said magnetic pole member away from a region of magnetic interaction; and
a magnetic drive member coupled for movement with said magnetic flux control means, and having one or more magnetic poles of the opposite or the same magnetic polarity to the poles of the magnetic pole member arranged in relation to the magnetic flux control means, for magnetic interaction by way of attraction or repulsion respectively between the magnetic drive member and the non-diverted flux in said region of magnetic interaction created by poles of said magnetic pole member adjacent said flux interruption portion.
